# EUROPEAN PATENT SPECIFICATION

(11) **EP 3 245 922 B1**
(45) Date of publication and mention of the grant of the patent: **25.09.2019**
(21) Application number: 15878097.3
(22) Date of filing: 15.04.2015
(51) Int. Cl.: A47J 37/06, F24C 7/04, A47J 36/24

(54) **INFRARED HEATING COOKER**
INFRAROTERWÄRMUNGSHERD
CUISEUR À CHAUFFAGE INFRAROUGE

(30) Priority: 15.01.2015 KR 20150000345 U
(43) Date of publication of application: 22.11.2017
(73) Proprietor: Lee, Jin Hee, Seoul 157-839 (KR)
(72) Inventor: Lee, Jin Hee, Seoul 157-839 (KR)
(74) Representative: Hanna Moore + Curley
(86) International application number: PCT/KR2015/003773
(87) International publication number: WO 2016/114451

(56) References cited:
- EP-A2- 2 433 529
- CN-U- 201 822 678
- CN-Y- 201 414 700
- KR-A- 20060 083 068
- KR-A- 20120 030 118
- KR-B1- 101 426 439
- KR-B1- 101 458 747
- KR-U- 20140 002 962
- KR-Y1- 200 239 790
- US-A1- 2010 209 083

## Description

### TECHNICAL FIELD

The present invention relates to an infrared heating cooker, and more particularly, to an infrared heating cooker in which a user can place a desired second cooking pan on an upper surface of a first cooking pan, to enable a food placed on the second cooking pan to be cooked.

Here, the second cooking pan may be a box-shaped rectangular cooking pan or a convex-shaped circular cooking pan or a convex-shaped hemispherical cooking pan or a concave-shaped circular cooking pan, with an opened top.

### BACKGROUND ART

Generally, the mechanism by which heat is transferred is divided into conduction, convection, and radiation. Conduction heat is mainly conveyed by solids, and convection heat is mainly conveyed by fluids.

Radiation heat is transmitted through a process of emitting electromagnetic energy from the surface of a certain heating element. Radiation heat is emitted at the speed of light even in the absence of medium, and is directly transmitted to a subject. The wavelength range of the radiation heat reaches the region of the ultraviolet ray having the shortest wavelength through the visible ray region from the infrared ray region. However, it is known that the wavelength bands of infrared rays such as the far infrared ray, near infrared ray and mid infrared ray have the strongest thermal effect compared with the visible ray or ultraviolet ray.

Accordingly, various cooking appliances using infrared rays have been developed even until now or in the past. For example, Korean patent registration No. 10-779225 discloses an infrared heating cooker comprising an infrared lamp having an outer quartz tube, a cooking pan provided at the upper end of the infrared lamp, and a reflector installed at the lower end of the infrared lamp. Such an infrared lamp in the infrared heating cooker serves to heat the cooking pan.

The present applicant has filed Korean patent application No. 10-2012-0101045 for a heating cooker in which the height of a grill pan is adjusted, and the heating cooker includes: "a pedestal 10 having a shaft hole 11 formed at the center of the upper surface thereof; a cooking pan 20 having a shaft protrusion 21 that is formed at the center of the lower surface thereof as a container that can contain food materials on the upper surface thereof in which the shaft protrusion 21 is easily detachably inserted into the shaft hole 11; a support 30 that is installed in a vertical direction at one side of the pedestal 10; and a heat source 40 installed at an upper end of the support 30 for receiving power from a power source and supplying heat to the cooking pan 20 from the upper side of the cooking pan 20, wherein the heating cooker further includes a height adjusting unit 50 that is disposed between the pedestal 10 and the
cooking pan 20 in which a first connecting portion 51 is formed at a lower end of the height adjusting unit 50 to be easily inserted into and disengaged from the shaft hole 11 and a second connecting portion 52 is formed at an upper end thereof, so that the shaft protrusion 21 is easily detachably inserted into the second connecting portion 52, wherein the height adjusting unit 50 is selectively disposed between the pedestal 10 and the cooling pan 20, to thus adjust the height of the cooking pan 20 to thereby adjust a gap between the cooking pan 20 and the heat source 40.

CN 2018 22678 U is an example of an infrared barbecue grill equipped with a conveniently detached baking plate.

However, heating cookers according to the conventional art have a problem that only the height of the cooking pan is adjusted, but another cooking pan desired by a user cannot be put on the upper surface of one cooking pan.

As a result, there has been a problem that various dishes cannot be cooked by using other cooking pans.

### DISCLOSURE

### TECHNICAL PROBLEM

To solve the above problems according to the conventional art, it is an object of the present invention to provide an infrared heating cooker in which a second cooking pan desired by a user is placed on an upper surface of a first cooking pan, so that foods can be cooked in the first cooking pan as well as the second cooking pan placed on the upper surface of the first cooking pan.

Accordingly, it is an object of the present invention to provide an infrared heating cooker having various types of cooking pans so that a user can freely cook a desired food on a second cooking pan or a first cooking pan.

However, the object of the present invention is not limited to the above-mentioned objects, and other objects not mentioned above can be clearly understood by those skilled in the art from the following description.

### TECHNICAL SOLUTION

To accomplish the above objects, according to an aspect of the present invention, there is provided an infrared heating cooker comprising: a lower body 111; a first cooking pan 106 provided on an upper surface of the lower body 111 and having a separation preventing unit 104 at a predetermined interval along a top edge thereof and receiving heat from an upper heating element 120 to transmit heat; and a second cooking pan 112 that is detachably mounted on the separation preventing unit 104 of the first cooking pan 106 mounted on an upper surface of the first cooking pan 106, and that receives heat from the upper heating element 120 installed at an upper body 110 to cook foods.

### BRIEF DESCRIPTION OF THE DRAWINGS

FIG. 1 is a perspective view showing an infrared heating cooker according to the present invention.
FIG. 2A is an exploded perspective view of some essential parts of the infrared heating cooker of FIG. 1.
FIG. 2B is an enlarged perspective view of some essential parts of the second cooking pan of FIG. 2A.
FIG. 3 is a perspective view showing a convex-shaped circular cooking pan instead of a box-shaped rectangular cooking pan with an opened top of FIG. 1.
FIGS. 4A, 4B and 4C are perspective views showing convex-shaped circular cooking pans and a convex-shaped hemispherical cooking pan instead of a box-shaped rectangular cooking pan having an opened top in FIG. 1.
FIG. 4D is an enlarged perspective view of a substantial part in which the convex-shaped hemispherical cooking pan of FIG. 4C is provided in the first cooking pan.
FIG. 5 is a perspective view showing a concave-shaped circular cooking pan instead of a box-shaped rectangular cooking pan with an opened top of FIG. 1.
FIG. 6 is a perspective view showing a convex-shaped circular cooking pan on a box-shaped rectangular cooking pan with an opened top of FIG. 1.

### BEST MODE

Preferred embodiments of the infrared heating cooker according to the present invention will be described.

In the following description, detailed description of known functions or constructions relevant to the invention will be omitted since they would obscure the invention unnecessarily.

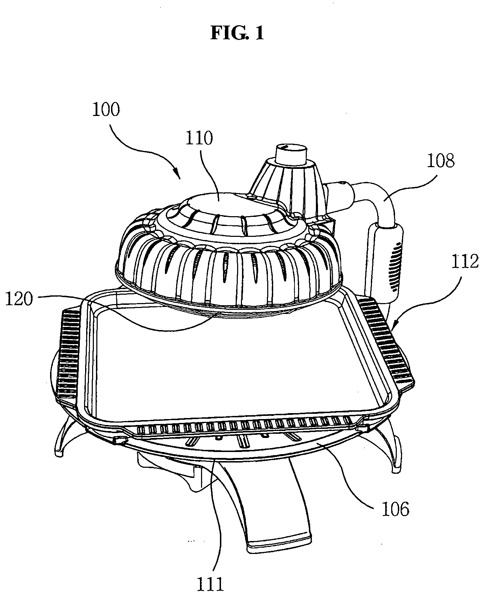

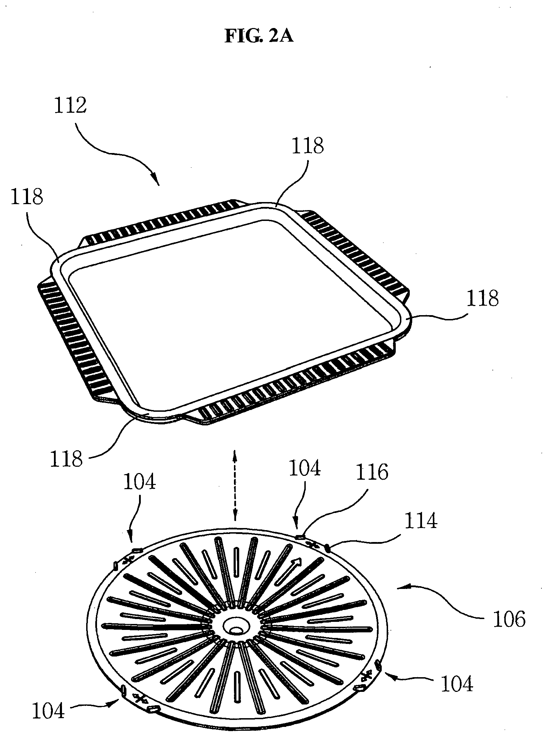

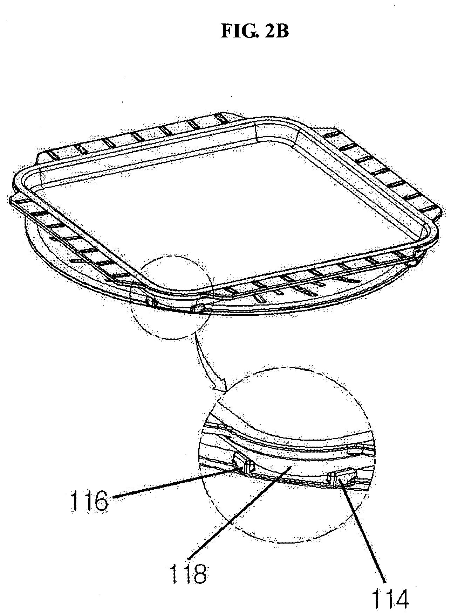

FIG. 1 is a perspective view showing an infrared heating cooker according to the present invention. FIG. 2A is an exploded perspective view of some essential parts of the infrared heating cooker of FIG. 1. FIG. 2B is an enlarged perspective view of some essential parts of the second cooking pan of FIG. 2A.

Referring to FIGS. 1 to 2A and 2B, the infrared heating cooker 100 according to the embodiment of the present invention includes: a first cooking pan 106 that is installed on an upper surface of a lower body 111, and is provided with a separation preventing unit 104 at regular intervals along the edge of the upper surface of the first cooking pan 106; a fixing member 108 that connects the lower body 111 with an upper body 110 having an upper heating element 120 wherein the upper heating element 120 installed at one side of the fixing member 108 and positioned at an upper side of the lower body 111 to transmit heat downward from the upper body 110; and a second cooking pan 112 that is detachably mounted on the separation preventing unit 104 of the first cooking pan 106 and is mounted on an upper surface of the first cooking pan 106, to thus receive radiant heat of the first cooking pan 106, and the heat from the upper heating element 120 of the upper body 110 to enable foods placed on the second cooking pan 112 to be cooked.

Here, the separation prevention unit 104 includes a first separation prevention protrusion 114 protruding obliquely from one side of a top edge of the first cooking pan 106; and
a second separation prevention protrusion 116 protruding obliquely from one side of the top edge of the first cooking pan 106 at a predetermined distance from the first separation prevention protrusion 114.

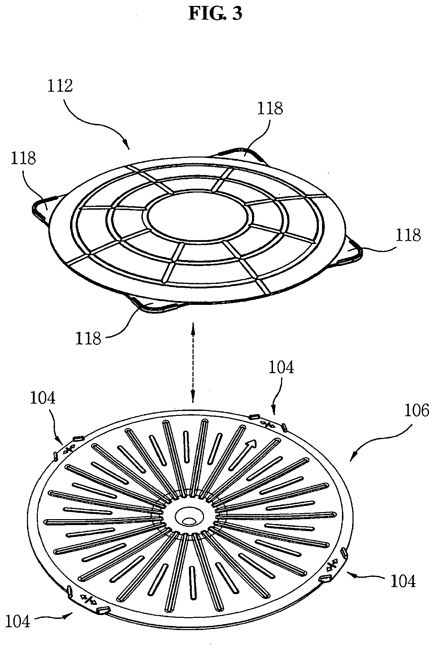

In addition, the second cooking pan 112 may be installed on the first cooking pan 106 and may be installed in a form of being fitted between the first and second separation prevention protrusions 114 and 116 according to the shape of the cooking pans. Here, the second cooking pan 112 may be provided with a separation prevention blade 118 so as to be fixedly installed without being separated from the first separation prevention protrusion 114 and the second separation prevention protrusion 116. The second cooking pan 112 may be a box-shaped rectangular cooking pan having an opened top. Meanwhile, as shown in FIG. 3, the second cooking pan 112 may be a convex-shaped circular cooking pan instead of the box-shaped rectangular cooking pan having an opened top.

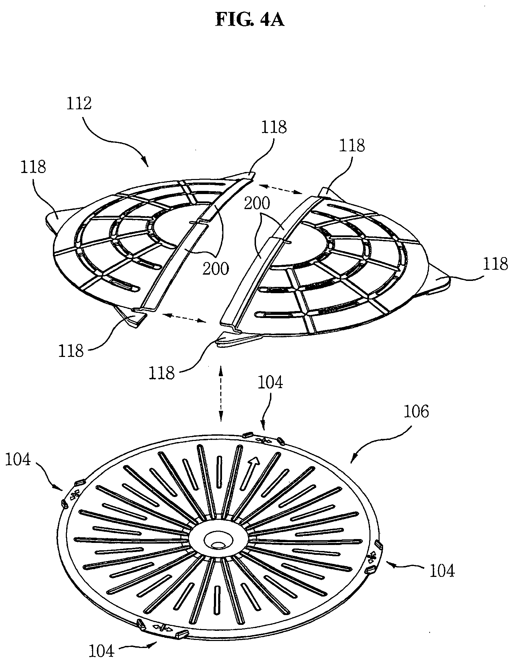

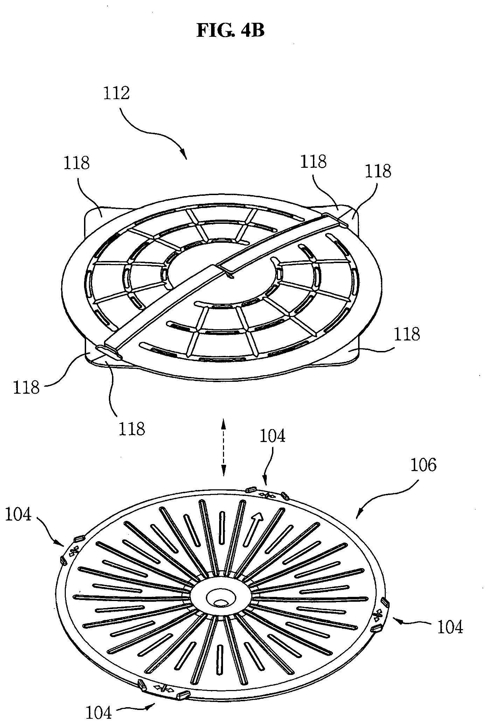

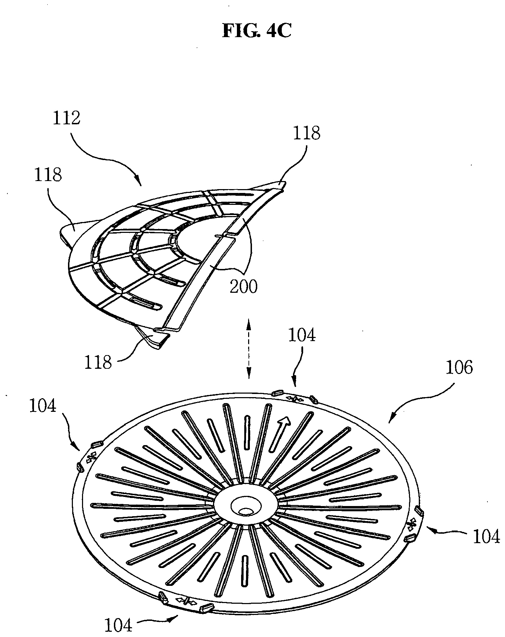

Meanwhile, as shown in FIG. 4A, 4B, or 4C, the second cooking pan 112 may be formed in a shape of a convex-shaped circular cooking pan or a hemispherical shape of a circular cooking pan instead of a box-shaped cooking pan.

In particular, as shown in FIG. 4A, a hemispherical cooking pan, which is a half of the convex-shaped cooking pan, may be further provided with a wing portion 200 that can prevent oil or food from being separated from the hemispherical cooking pan, or that can assist a user to easily couple the hemispherical cooking pan with another hemispherical cooking pan so as to be assembled into a complete set of the hemispherical cooking pans.

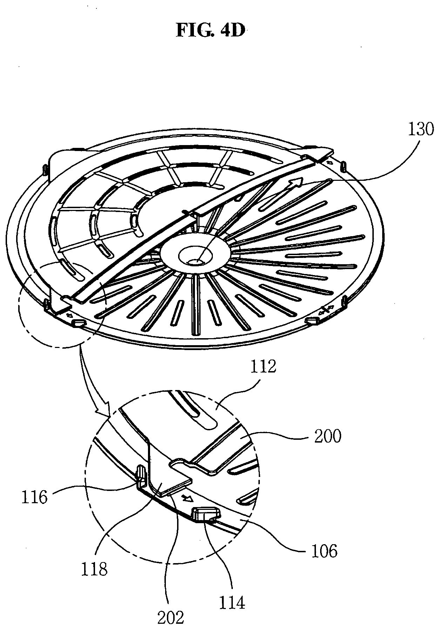

In addition, referring to FIG. 4D, when the convex-shaped hemispherical cooking pan is installed on the upper surface of the first cooking pan 106, the first cooking pan 106 may be further provided with a third separation prevention protrusion 202 that can assist a user to easily couple the hemispherical second cooking pan with the first cooking pan 106, and to fixedly mount the hemispherical second cooking pan on one half of the first cooking pan 106 without being slid.

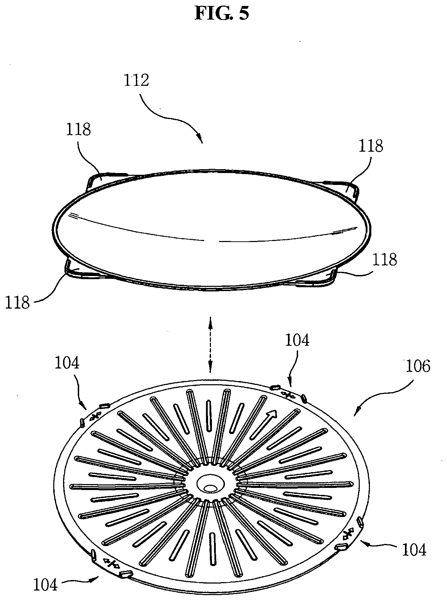

Meanwhile, as shown in FIG. 5, the second cooking pan 112 may be a concave-shaped circular cooking pan instead of the box-shaped rectangular cooking pan having an opened top.

The assembling process and the use state of the infrared heating cooker 100 according to the embodiment of the present invention will be described as follows.

Here, the assembling process of the infrared heating cooker 100 according to the embodiment of the present invention may be changed in any order depending on an assembler.

The first cooking pan 106, which receives heat from the upper heating element 120, is prepared with separation prevention units 104 at a certain interval along the edge of the first cooking pan 106, after the upper heating element 120 installed in the upper body 110 is positioned.

Here, each of the separation prevention units 104 includes a first separation prevention protrusion 114 protruding obliquely from one side of a top edge of the first cooking pan 106, a second separation prevention protrusion 116 protruding obliquely from one side of the top edge of the first cooking pan 106 at a predetermined interval from the first separation prevention protrusion 114, and a third separation prevention protrusion 202 between the first separation prevention protrusion 114 and the second separation prevention protrusion 116.

In addition, a fixing member 108 connecting the upper and lower bodies is installed on one side of the outer surface of the lower body 111 and then an upper heating element 120 for transmitting heat downward from the upper body 110 is installed on an upper side of the fixing member 108.

In addition, a variety of shapes of the second cooking pans 112 may be fitted with the first cooking pan 106. In this case, as shown in FIG. 5, the second cooking pan 112 may include separation prevention blades 118, and the second cooking pan 112 may be mounted on the first cooking pan 112, in such a manner that the second cooking pan 112 is placed on the upper surface of the first cooking pan 106. In this case, each of the separation prevention blades 118 of the second cooking pan 112 is positioned between the first and second separation prevention protrusions 114 and 116 of each of the separation prevention unit 104.

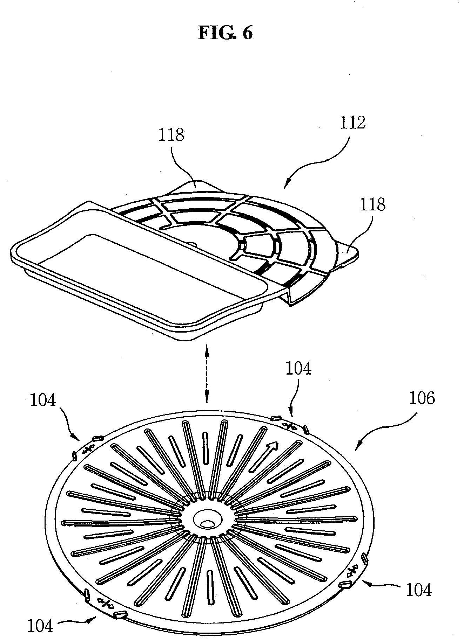

Here, the second cooking pan 112 may be a box-shaped rectangular cooking pan (FIG. 2A or 2B) or a convex-shaped circular cooking pan (FIG. 3, 4A, or 4B) or a convex-shaped hemispherical cooking pan (FIG. 4C or 4D) that is formed by halving a convex-shaped circular cooking pan (FIG. 3) in half, or a concave-shaped circular cooking pan (FIG. 5), or a combined cooking pan (FIG. 6) of a convex-shaped hemispherical cooking pan and a rectangular cooking pan, all with an opened top.

When the assembly of the infrared heating cooker 100 according to the embodiment of the present invention is completed as described above, it is possible to cook food with broth or soup on the second cooking pan 112, that is, the box-shaped rectangular cooking pan having the top opened, to thus allow a user to cook the food to prevent a loss of moisture of the food ingredients during cooking.

Then, the upper heating element 120 located inside the upper body 110 is driven. When the upper heating element 120 is driven, the upper heating element 120 transmits heat to the first cooking pan 106 and the second cooking pan 112. The first cooking pan 106 and the second cooking pan 112 receive heat from the upper heating element 120 and the second cooking pan 112 is also heated by receiving the radiant heat transferred from the first cooking pan 106 heated by the upper heating element 120.

Then, the food placed on the box-shaped rectangular cooking pan whose top is opened is cooked by the heat.

Therefore, when the food placed on the box-shaped rectangular cooking pan with the top opened is cooked, the broth does not flow down out of the bottom of the box-shaped rectangular cooking pan.

Meanwhile, the convex-shaped circular cooking pan or the convex-shaped hemispherical cooking pan may be positioned on the upper surface of the first cooking pan 106 and utilized depending on the use of the food to be cooked.

Also, as shown in FIG. 4B, two convex-shaped hemispherical cooking pans may be formed into a single convex-shaped circular cooking pan by combining two hemispherical cooking pans into one circular cooking pan.

Meanwhile, as shown in FIG. 5, the concave-shaped circular cooking pan can be positioned on the upper surface of the first cooking pan 106, and the concave circular cooking pan can be used for cooking, such as roasting or baking.

As shown in FIG. 6, the second cooking pan 112 can be provided with a convex hemispherical cooking pan attached to a box-shaped rectangular cooking pan having an opened top, and can be also used for a baking dish and a roasting dish. Further, as shown in FIG. 4D, the convex-shaped hemispherical cooking pan provided with an oil discharge hole 130 and the concave-shaped first cooking pan 106 can be provided to cook respectively different materials such as a dry material and a wet material.

The detailed description of the invention is merely exemplary of the invention, which is used for the purpose of describing the invention only and is not used to limit the scope of the invention, which is set forth in the patent claims. It will be understood by those skilled in the art that various changes in form and details and equivalent other embodiments may be made therein without departing from the scope of the present invention. Accordingly, the true scope of protection of the present invention should be determined by the technical idea of the appended claims.

### ADVANTAGEOUS EFFECTS

As described above, the infrared heating cooker according to the present invention has an effect of enabling a user to cook food with various kinds of ingredients, with a first cooking pan, a second cooking pan, or first and second cooking pans, by placing or combining the second cooking pan desired by the user on or with the upper surface of the first cooking pan.

In particular, the second cooking pan according to the present invention may be a box-shaped rectangular cooking pan or a convex-shaped circular cooking pan or a convex-shaped hemispherical cooking pan or concave-shaped circular cooking pan (see FIGS. 2A, 3, 4B, 4D, 5, and 6). Various combinations of the first and second cooking pans can be used to cook the food desired by a user at will.

## Claims

1. An infrared heating cooker (100) comprising:
a lower body (111);
an upper body (110); an upper heating element (120) that is installed inside the upper body (110);
a first cooking pan (106) provided on an upper surface of the lower body (111) and having a separation preventing unit (104) at predetermined intervals along a top edge thereof and receiving heat from the upper heating element (120) to transmit heat;
a second cooking pan (112); and
**characterized in that** the cooker further comprises:
a fixing member (108) that connects the upper and lower bodies at one side of the outer surface of the infrared heating cooker (100), in which the upper heating element (120) is installed at one side of the fixing member (108) to transmit heat downward from the upper heating element (120); and
the second cooking pan (112) is detachably mounted on the separation preventing unit (104) of the first cooking pan (106) and mounted on an upper surface of the first cooking pan (106), and that receives radiant heat from the first cooking pan (106) and heat from the upper heating element (120) to cook foods by using a portion of only the first cooking pan, both a portion of the first cooking pan and the second cooking pan, or only the second cooking pan.

2. The infrared heating cooker of claim 1, wherein the second cooking pan (112) comprises a separation preventing blade (118) so as to be fitted between first and second separation preventing projections (114) and (116) at regular intervals, wherein the second cooking pan (112) is a box-shaped rectangular cooking pan or a convex-shaped circular cooking pan or a convex-shaped hemispherical cooking pan or a concave-shaped circular cooking pan or a combination of a hemispherical convex-shaped cooking pan and a rectangular cooking pan, all with an opened top, which is capable of being installed in the first cooking pan (106).

3. The infrared heating cooker of claim 2, wherein the second cooking pan (112) is a convex-shaped hemispherical cooking pan and comprises: a wing portion (200) that enables an easy assembly of two opposite convex-shaped hemispherical cooking pans into one convex-shaped circular cooking pan; and the separation prevention blade (118) prevents the second cooking pan (112) from being slid or separated from the first cooking pan (106) when the second cooking pan (112) is mounted on the first cooking pan (106), and the first cooking pan (106) further comprises a third separation prevention protrusion (202) that assists a user to couple the second cooking pan (112) with the first cooking pan (106).

## Patentansprüche

1. Infrarot-Heizkocher (100), umfassend:
einen unteren Körper (111);
einen oberen Körper (110); ein oberes Heizelement (120), das in dem oberen Körper (110) installiert ist;
eine erste Kochschale (106), die auf einer oberen Fläche des unteren Körpers (111) vorgesehen ist und eine Trennungspräventionseinheit (104) in vorbestimmten Intervallen entlang einer Oberkante davon aufweist und Wärme von dem oberen Heizelement (120) zum Übertragen von Wärme empfängt;
eine zweite Kochschale (112); und
**dadurch gekennzeichnet, dass** der Kocher weiter umfasst:
ein Befestigungselement (108), das den oberen und den unteren Körper an einer Seite der Außenfläche des Infrarot-Heizkochers (100) verbindet, wobei das obere Heizelement (120) an einer Seite des Betätigungselements (108) installiert ist, um Wärme von dem oberen Heizelement (120) nach unten zu übertragen; und
wobei die zweite Kochschale (112) an der Trennungspräventionseinheit (104) der ersten Kochschale (106) lösbar angebracht ist und an einer oberen Fläche der ersten Kochschale (106) angebracht ist und Strahlungswärme von der ersten Kochschale (106) und Wärme von dem oberen Heizelement (120) empfängt, um Nahrungsmittel zu kochen, unter Verwendung eines Abschnitts nur der ersten Kochschale, eines Abschnitts der ersten Kochschale und der zweiten Kochschale oder nur der zweiten Kochschale.

2. Infrarot-Heizkocher nach Anspruch 1, wobei die zweite Kochschale (112) eine Trennungspräventionsklinge (118) umfasst, die zwischen einen ersten und einen zweiten Trennungspräventionsüberstand (114) und (116) in regelmäßigen Intervallen einzupassen ist,
wobei die zweite Kochschale (112) eine kastenförmige rechteckige Kochschale oder eine konvex geformte runde Kochschale oder eine konvex geformte halbkugelförmige Kochschale oder eine konkav geformte runde Kochschale oder eine Kombination aus einer halbkugelförmigen konvex geformten Kochschale und einer rechteckigen Kochschale ist, alle mit offener Oberseite, die in der ersten Kochschale (106) installiert werden kann.

3. Infrarot-Heizkocher nach Anspruch 2, wobei die zweite Kochschale (112) eine konvex geformte halbkugelförmige Kochschale ist und umfasst: einen Flügelabschnitt (200), der einen einfachen Zusammenbau zweier entgegengesetzter konvex geformter halbkugelförmiger Kochschalen zu einer konvex geformten runden Kochschale ermöglicht; und wobei die Trennungspräventionsklinge (118) die zweite Kochschale (112) daran hindert, von der ersten Kochschale (106) verschoben oder getrennt zu werden, wenn die zweite Kochschale (112) an der ersten Kochschale (106) angebracht wird, und die erste Kochschale (106) weiter einen dritten Trennungspräventionsvorsprung (202) umfasst, der einen Benutzer beim Koppeln der zweiten Kochschale (112) an die erste Kochschale (106) überstützt.

## Revendications

1. Cuiseur à chauffage infrarouge (100) comprenant :
un corps inférieur (111) ;
un corps supérieur (110) ;
un élément chauffant supérieur (120) qui est installé à l'intérieur du corps supérieur (110) ;
un premier plat de cuisson (106) disposé sur une surface supérieure du corps inférieur (111) et ayant une unité anti-séparation (104) à intervalles prédéterminés le long d'un bord supérieur de celui-ci et recevant de la chaleur à partir de l'élément chauffant supérieur (120) pour transmettre de la chaleur ;
un second plat de cuisson (112) ; et
**caractérisé par le fait que** le cuiseur comprend en outre :
un élément de fixation (108) qui relie les corps supérieur et inférieur sur un côté de la surface externe du cuiseur à chauffage infrarouge (100), dans lequel l'élément chauffant supérieur (120) est installé sur un côté de l'élément de fixation (108) pour transmettre de la chaleur vers le bas à partir de l'élément chauffant supérieur (120) ; et
le second plat de cuisson (112) est monté de manière détachable sur l'unité anti-séparation (104) du premier plat de cuisson (106) et monté sur une surface supérieure du premier plat de cuisson (106), et reçoit de la chaleur rayonnante à partir du premier plat de cuisson (106) et de la chaleur à partir de l'élément chauffant supérieur (120) pour cuire des aliments en utilisant une partie uniquement du premier plat de cuisson, à la fois une partie du premier plat de cuisson et du second plat de cuisson, ou uniquement le second plat de cuisson.

2. Cuiseur à chauffage infrarouge selon la revendication 1, dans lequel le second plat de cuisson (112) comprend une lame anti-séparation (118) de façon à être adaptée entre des première et deuxième saillies anti-séparation (114) et (116) à intervalles réguliers, le second plat de cuisson (112) étant un plat de cuisson rectangulaire en forme de boîte ou un plat de cuisson circulaire de forme convexe ou un plat de cuisson hémisphérique de forme convexe ou un plat de cuisson circulaire de forme concave ou une combinaison d'un plat de cuisson hémisphérique de forme convexe et d'un plat de cuisson rectangulaire, tous ayant une partie supérieure ouverte, qui est capable d'être installé dans le premier plat de cuisson (106).

3. Cuiseur à chauffage infrarouge selon la revendication 2, dans lequel le second plat de cuisson (112) est un plat de cuisson hémisphérique de forme convexe et comprend : une partie ailette (200) qui permet un assemblage aisé de deux plats de cuisson hémisphériques de forme convexe en un plat de cuisson circulaire de forme convexe ; et la lame anti-séparation (118) empêche le second plat de cuisson (112) de coulisser ou d'être séparé du premier plat de cuisson (106) lorsque le second plat de cuisson (112) est monté sur le premier plat de cuisson (106), et le premier plat de cuisson (106) comprend en outre une troisième saillie anti-séparation (202) qui aide un utilisateur à accoupler le second plat de cuisson (112) au premier plat de cuisson (106).
